# FASCICULE DE BREVET EUROPEEN

(11) **EP 3 242 243 B1**
(45) Date de publication et mention de la délivrance du brevet: **03.07.2019**
(21) Numéro de dépôt: 17169162.9
(22) Date de dépôt: 03.05.2017
(51) Int. Cl.: G06F 21/79, G07F 7/08

(54) **PROCÉDÉ DE SAUVEGARDE ET DE RESTAURATION DE DONNÉES D'UN ÉLÉMENT SÉCURISÉ**
VERFAHREN ZUM SICHERN UND WIEDERHERSTELLEN VON DATEN EINES GESICHERTEN ELEMENTS
METHOD FOR BACKING UP AND RESTORING DATA OF A SECURE ELEMENT

(30) Priorité: 03.05.2016 FR 1653999
(43) Date de publication de la demande: 08.11.2017
(73) Titulaire: Idemia Identity & Security France, 92400 Courbevoie (FR)
(72) Inventeur: DEL GIUDICE, Lauren, 92130 Issy Les Moulineaux (FR); FONTENEAU, Anthony, 92130 Issy Les Moulineaux (FR); BIEULES, Pierrick, 92130 Issy Les Moulineaux (FR)
(74) Mandataire: Regimbeau

(56) Documents cités:
- EP-A1- 1 067 460
- WO-A1-01/08049
- WO-A1-2015/019484
- US-A1- 2016 233 880

## Description

### DOMAINE DE L'INVENTION

La présente invention concerne le domaine des éléments sécurisés.

L'invention a pour objets des procédés de sauvegarde et de restauration de données dans un élément sécurisé.

### ETAT DE LA TECHNIQUE

Un élément sécurisé (Secure Element ou SE en anglais) est une plate-forme matérielle inviolable capable de contenir des données en conformité avec les règles et les exigences de sécurité fixées par des autorités de confiance.

Un élément sécurisé comprend une mémoire non volatile et un processeur exécutant un système d'exploitation. Des applications supplémentaires, dont l'exécution est contrôlée par le système d'exploitation, peuvent être installées selon le bon vouloir d'un utilisateur de l'élément sécurisé.

Or, l'écriture de données supplémentaires dans la mémoire non volatile (par exemple une application supplémentaire) peut compromettre le bon fonctionnement de l'élément sécurisé.

Par ailleurs, l'utilisateur de l'élément sécurisé étant le propriétaire de ses données, il souhaite pouvoir les supprimer de manière sécurisée avant de revendre son élément sécurisé.

Pour pallier ce problème, il est connu de procéder à une sauvegarde de données contenues dans la mémoire non volatile de l'élément sécurisé vers un serveur de confiance (serveur « TSM » en anglais). Les données sauvegardées peuvent être restaurées ultérieurement dans la mémoire non volatile de l'élément sécurisé en téléchargeant ces données depuis le serveur de confiance. La restauration permet de reconfigurer la mémoire non volatile de l'élément sécurisé dans l'état dans lequel elle se trouvait au moment où la sauvegarde a été effectuée ; toute modification opérée en mémoire non volatile entre la sauvegarde et la restauration est effacée, par exemple des données compromettant le bon fonctionnement de l'élément sécurisé.

Toutefois, le procédé de sauvegarde et de restauration de données présente l'inconvénient majeur de faire sortir à l'extérieur de l'élément sécurisé des données confidentielles, ce qui représente un risque important de sécurité puisqu'un tiers pourrait intercepter ces données confidentielles. WO01/08049 décrit un procédé de sauvegarder de données.

### EXPOSE DE L'INVENTION

Un but de l'invention est de proposer un procédé de sauvegarde et un procédé de restauration de données dans un élément sécurisé, permettant de réduire les risques de sécurité susmentionnés. L'invention est définie dans les revendications.

Il est dès lors proposé, selon un premier aspect de l'invention, un procédé de sauvegarde de sauvegarde de données mémorisées dans une mémoire non volatile d'un élément sécurisé, le procédé comprenant des étapes de :
- génération d'une image de sauvegarde contenant les données mémorisées dans la mémoire non volatile,
- écriture de l'image de sauvegarde dans la mémoire non volatile de l'élément sécurisé.

Comme l'image de sauvegarde est écrite dans la mémoire non volatile d'où sont originaire les données à sauvegardées, la sauvegarde est mise en oeuvre de façon locale à l'élément sécurisé. Aucun donnée à sauvegarder ne sort de l'élément sécurisé au cours de cette sauvegarde.

Le procédé de sauvegarde peut comprendre en outre les caractéristiques suivantes prises seules ou en combinaison lorsque cela est techniquement possible.

La génération de l'image de sauvegarde peut comprendre une compression d'au moins une partie des données, ce qui permet de réduite l'espace occupé par l'image de sauvegarde dans la mémoire non volatile.

La compression peut être mise en oeuvre sur des données localisées dans plusieurs zones prédéterminées de la mémoire non volatile, de sorte à produire plusieurs blocs compressés, la génération de l'image de sauvegarde comprenant une concaténation des blocs compressés. De la sorte, l'image de sauvegarde est de taille minimale et consomme peu d'espace dans la mémoire non volatile de l'élément sécurisé.

Le procédé de sauvegarde peut comprendre des étapes de :
- défragmentation d'une zone de la mémoire non volatile contenant au moins une partie des données à sauvegarder de sorte à former, dans la zone, une région occupée contenant ladite partie des données et une région libre,
- compression de la partie des données contenues dans la région occupée, après la défragmentation.

Avant la défragmentation, les données à sauvegarder sont dispersées dans la zone considérée. Le fait de mettre en oeuvre la défragmentation avant la compression permet de concentrer les données à sauvegarder dans une région de taille réduite (la région occupée), et donc d'améliorer le taux de compression mis en oeuvre.

La zone considérée (et donc la région occupée après sa défragmentation) peut contenir des objets destinés à être manipulés par un programme codé dans un langage objet, et les objets être compressés par dictionnaire. Une telle compression par dictionnaire fournit des taux de compression particulièrement élevés lorsque lorsqu'il est appliqué à des données comprenant des schémas ou motifs répétitifs et de petites tailles, ce qui est le cas de tels objets.

Le dictionnaire de compression peut être créé à partir des objets à compresser. De la sorte, la mémorisation d'un dictionnaire préconstitué dans la mémoire non volatile de l'élément sécurisé, consommateur en espace mémoire, peut être évitée.

Le procédé peut en outre comprendre une compression du contenu de la région libre au moyen d'un algorithme de compression différent de celui utilisé pour compresser la partie des données contenue dans la région occupée.

La compression du contenu de la région libre comprend un codage par plages de ce contenu. Un tel codage appliqué à la région libre fournit un taux de compression très élevé.

Les données à sauvegarder peuvent être contenues dans au moins une zone prédéterminée de la mémoire non volatile. Dans ce cas, le procédé peut comprendre la génération et la mémorisation dans la mémoire non volatile de métadonnées comprenant, pour chaque zone, une adresse de la zone.

Les métadonnées peuvent comprendre, pour au moins un des zones, une information de contrôle d'intégrité de la zone, une taille de la zone.

Le procédé de sauvegarde peut également comprendre la génération et la mémorisation dans la mémoire non volatile d'une information de contrôle d'intégrité des métadonnées.

Le procédé de sauvegarde peut également comprendre la génération et la mémorisation dans la mémoire non volatile d'une information de contrôle d'intégrité de l'image de sauvegarde générée.

Il est également proposé, selon un deuxième aspect de l'invention, un procédé de restauration de données vers une mémoire non volatile d'un élément sécurisé, le procédé comprenant des étapes de :
- lecture d'une image de sauvegarde mémorisée dans la mémoire non volatile de l'élément sécurisé, l'image de sauvegarde contenant les données à restaurer,
- écriture dans la mémoire non volatile d'une copie des données contenues dans l'image de sauvegarde.

La restauration peut comprendre une configuration de l'élément sécurisé dans un mode occupé dans lequel l'élément sécurisé ne traite pas une commande externe de redémarrage physique de l'élément sécurisé. Une telle configuration dans le mode occupé permet d'éviter une corruption du contenu de la mémoire non volatile au cours de la restauration.

Selon un troisième aspect de l'invention, il est proposé en outre un procédé de réinitialisation d'un élément sécurisé comprenant une mémoire non volatile mémorisant des données, le procédé comprenant des étapes de sauvegarde des données au moyen du procédé selon le premier aspect de l'invention, et une restauration des données sauvegardées au moyen du procédé selon le deuxième aspect de l'invention.

La mémoire non volatile de l'élément sécurisé peut être intégrée de façon permanente à l'élément sécurisé.

Selon un quatrième aspect de l'invention, il est proposé un produit programme d'ordinateur comprenant des instructions de code de programme pour l'exécution des étapes du procédé selon le premier aspect et/ou le deuxième aspect et/ou le troisième aspect de l'invention, lorsque ce programme est exécuté par au moins un processeur.

Selon un cinquième aspect de l'invention, il est proposé un élément sécurisé comprenant une mémoire non volatile, au moins un processeur configuré pour sauvegarder des données mémorisées dans la mémoire non volatile, le processeur étant en outre configuré pour :
- générer une image de sauvegarde contenant les données mémorisées dans la mémoire non volatile,
- écrire dans la mémoire non volatile l'image de sauvegarde.

Selon un sixième aspect de l'invention, il est proposé un élément sécurisé comprenant une mémoire non volatile, au moins un processeur configuré pour restaurer des données vers la mémoire non volatile, le processeur étant en outre configuré pour :
- lire une image de sauvegarde contenue dans la mémoire non volatile, l'image de sauvegarde contenant les données à restaurer,
- écrire dans la mémoire non volatile une copie des données contenues dans l'image de sauvegarde.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente de façon schématique un élément sécurisé.
- La figure 2 représente de façon schématique le contenu d'une mémoire non volatile d'un élément sécurisé.
- La figure 3 est un organigramme d'étapes d'un procédé de sauvegarde de données mémorisées dans un élément sécurisé, selon un mode de réalisation de l'invention.
- La figure 4 est un organigramme d'étapes d'un procédé de restauration de données vers un élément sécurisé, selon un mode de réalisation de l'invention.
- La figure 5 illustre le contenu d'une image de sauvegarde IS générée par le procédé de sauvegarde dont les étapes sont montrées en figure 3.

Sur l'ensemble des figures, les éléments similaires portent des références identiques.

### DESCRIPTION DETAILLEE DE L'INVENTION

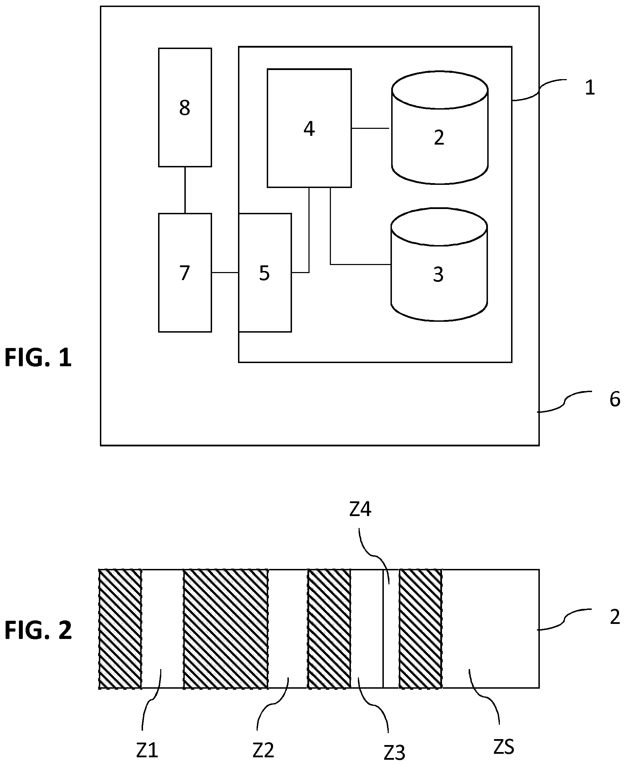

En référence à la **figure 1****,** un élément sécurisé 1 comprend une mémoire non volatile 2, une mémoire volatile 3, au moins un processeur 4 et une interface de communication 5 avec un terminal 6.

La mémoire non volatile 2 comprend une ou plusieurs élément(s) de mémoire. Un élément de mémoire peut être de tout type apte à mémoriser des données de façon persistante : flash, EEPROM, etc. De préférence, la mémoire non volatile 2 est intégrée de façon permanente à l'élément sécurisé 1 (dans le sens où elle n'est pas amovible).

La mémoire volatile 3 comprend une ou plusieurs unité(s) mémoire volatile 3, par exemple de type RAM. La mémoire volatile 3 est apte à mémoriser des données de façon temporaire. La mémoire volatile 3 est intégrée de façon permanente à l'élément sécurisé 1 (dans le sens où elle n'est pas amovible).

La mémoire non volatile 2 mémorise un système d'exploitation et au moins une application codée dans un langage objet. Le système d'exploitation, appelé plus simplement OS dans la suite, est configuré pour contrôler l'exécution de chaque application de l'élément sécurisé 1, lorsqu'il est exécuté par le processeur 4.

La mémoire non volatile 2 mémorise par ailleurs un programme de sauvegarde, et un programme de restauration, dont les fonctionnements seront décrits plus loin.

Le processeur 4 est configuré pour accéder à la mémoire volatile 3 et à la mémoire non volatile 2, et pour exécuter l'OS, les applications, et les programmes de sauvegarde et de restauration.

Le processeur 4 est par ailleurs relié à l'interface de communication 5.

L'élément sécurisé 1 prend la forme d'une carte à puce. L'élément sécurisé est par exemple une carte, eSIM ou eSE. L'élément peut être soudé directement au terminal 6.

Le terminal 6 comprend une interface de communication 7 pour communiquer avec l'interface de communication 5 de l'élément sécurisé 1. Le terminal 6 comprend par un logement adapté pour recevoir l'élément sécurisé, et une connectique pour se connecter électriquement à une connectique de l'élément sécurisé.

Le terminal 6 comprend par ailleurs au moins un processeur 8 configuré pour exécuter au moins une application, dite application « hôte » (« host » en anglais), configurée pour communiquer avec l'OS ou une application exécutée par le processeur de l'élément sécurisé 1, via l'interface de communication 5. Généralement, le terminal 6 comprend une pluralité d'applications hôtes, par exemple une application pilotant un capteur biométrique du terminal 6.

Le terminal 6 est un équipement personnel d'utilisateur, tel qu'un smartphone, une tablette, un téléphone, etc.

### Sauvegarde de données

Une ou plusieurs zone(s) de la mémoire non volatile 2, contenant des données à sauvegarder, sont prédéterminées. Ces zones sont appelées dans la suite « zones sources ». Les zones sources peuvent ne pas être contigües dans la mémoire non volatile 2.

Dans l'exemple représenté en **figure 2****,** la mémoire non volatile 2 comprend quatre zones sources Zi, i allant de 1 à 4.

L'adresse de début dans la mémoire non volatile 2 de chaque zone source Zi est prédéterminée, ainsi que la taille de la zone source et/ou son adresse de fin.

Est également prédéterminée une zone de sauvegarde ZS dans la mémoire non volatile 2, différente des zones sources.

Les données à sauvegarder comprennent des données utiles écrites dans la mémoire non volatile 2 par l'OS. Une zone source contenant des données utiles de l'OS, qualifiée dans la suite de « zone source de l'OS », est typiquement accessible en lecture et en écriture par l'OS (par opposition à une zone accessible en lecture seule comprenant le binaire du système d'exploitation lui-même, et qui n'est pas une zone source, c'est-à-dire une zone dont le contenu est à sauvegarder). Dans l'exemple représenté en **figure 2****,** les zones Z1 et Z2 sont des zones sources de l'OS.

Les données à sauvegarder comprennent par ailleurs des données « d'application », c'est-à-dire des données utiles manipulées par au moins une application de l'élément sécurisé 1. Les zones sources contenant des données d'application sont qualifiées dans la suite de « zones sources d'applications ».

Au moins une zone source d'application est ou contient un tas d'objets (« heap » en anglais). Lorsqu'une application codée dans un langage objet est exécutée par le processeur 4 de l'élément sécurisé 1, cette application peut écrire des objets dans le tas d'objets correspondant, y accéder plus tard en lecture, et les effacer du tas d'objets.

Le tas d'objet peut être partagé par plusieurs applications codées dans un même langage objet. Dans l'exemple représenté en figure 2, les zones Z3 et Z4 sont des zones sources d'applications. Ces deux zones, contigües, forment en réalité une seule zone comprenant le tas d'objets (on verra dans la suite que ces deux zones Z3 et Z4 sont traitées de façon différentes au cours de la sauvegarde).

Dans un mode de réalisation particulier, le système d'exploitation est Java Card et le langage objet est le langage Java. Un tas d'objet est alloué en mémoire non volatile 2 pour toutes les applications codées en Java Card.

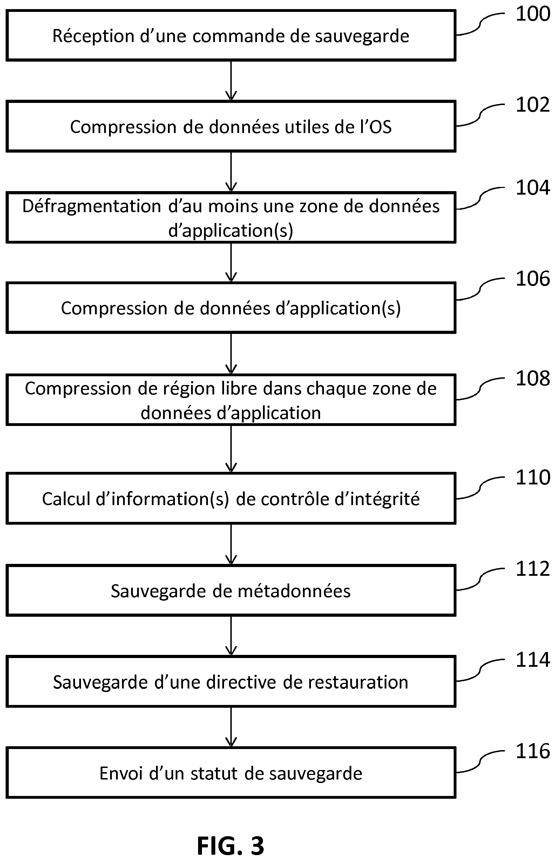

En référence à la **figure 3****,** une sauvegarde des données contenues dans les zones sources Z1 à Z4 comprend les étapes suivantes.

Le processeur 8 du terminal 6 génère une commande de sauvegarde et l'envoie à l'élément sécurisé 1 via les interfaces de communication 7 et 5. La commande est par exemple de type ADPU.

La commande de réinitialisation est reçue par l'interface de communication 5, qui transmet la commande au processeur 4 pour qu'elle soit traitée par le programme de sauvegarde.

Le programme de sauvegarde compresse 102 le contenu de chaque zone source de l'OS.

La compression 102 comprend l'allocation, dans la mémoire volatile 3, d'un tampon (« buffer » en anglais) de compression, utilisé pour stocker de façon temporaire les données d'entrée à compresser et les données de sortie compressées. Le tampon est de taille fixe et prédéterminée. Cette taille est indépendante de la taille des données à compresser.

L'étape de compression 102 utilise un algorithme de compression par dictionnaire.

De façon connue en soi, un algorithme de compression par dictionnaire procède par la recherche de similitudes entre les données à compresser et un ensemble de chaînes contenues dans une structure de données appelée « dictionnaire ». Quand une similitude est trouvée, la donnée correspondante est remplacée par une référence vers l'emplacement de cette chaîne dans le dictionnaire. L'utilisation d'un algorithme de compression par dictionnaire procure d'excellents taux de compression. Un tel algorithme est donc particulièrement intéressant pour des éléments sécurisés disposant d'une capacité de stockage limitée.

En particulier, un algorithme de compression par dictionnaire fournit des taux de compression particulièrement élevés lorsque lorsqu'il est appliqué à des données comprenant des schémas ou motifs répétitifs et de petites tailles. Ceci est le cas de données contenues dans les zones sources de l'OS ou des applications.

La compression 102 comprend la création d'un dictionnaire de compression. Habituellement, un tel dictionnaire est constitué de façon préliminaire. Dans le présent procédé, le dictionnaire est au contraire constitué au fur et à mesure de la compression 102, et ce à partir des données à compresser elles-mêmes. Plus précisément, la compression 100 comprend une recherche de motifs répétitifs dans les données à compresser contenues dans les différentes zones sources de l'OS. Lorsqu'un motif répétitif est détecté, il est ajouté au dictionnaire.

De préférence, un algorithme de compression par dictionnaire glissant est utilisé pour la compression 102. Dans ce cas, la recherche de motifs répétés et l'encodage des données dans un format compressé sont concomitants ; le dictionnaire est construit dynamiquement à partir des données à compresser elles-mêmes.

Pour améliorer encore l'efficacité de l'algorithme de compression, les zones sources sont concaténées virtuellement dans le tampon alloué pour que l'algorithme ne voie qu'un seul bloc de données contiguës. En concaténant virtuellement les zones pendant la compressions, le dictionnaire n'est pas vide en début de compression de la seconde zone source, mais issu du contenu de la première zone source.

Avoir un dictionnaire créé à partir des données elles-mêmes permet de ne pas embarquer un dictionnaire supplémentaire et potentiellement mal adapté. Aussi, le fait de construire le dictionnaire à l'aide des données à compresser, comme dans le cas d'un dictionnaire glissant, présente l'avantage de ne pas avoir à mémoriser un dictionnaire prédéterminé dans la mémoire non volatile 2. Cela permet une consommation minimale de la mémoire non volatile 2, et un taux de compression optimal.

L'étape de compression 102 produit un bloc compressé de données compressées, qui est écrite dans la zone de sauvegarde ZS définie dans la mémoire non volatile 2.

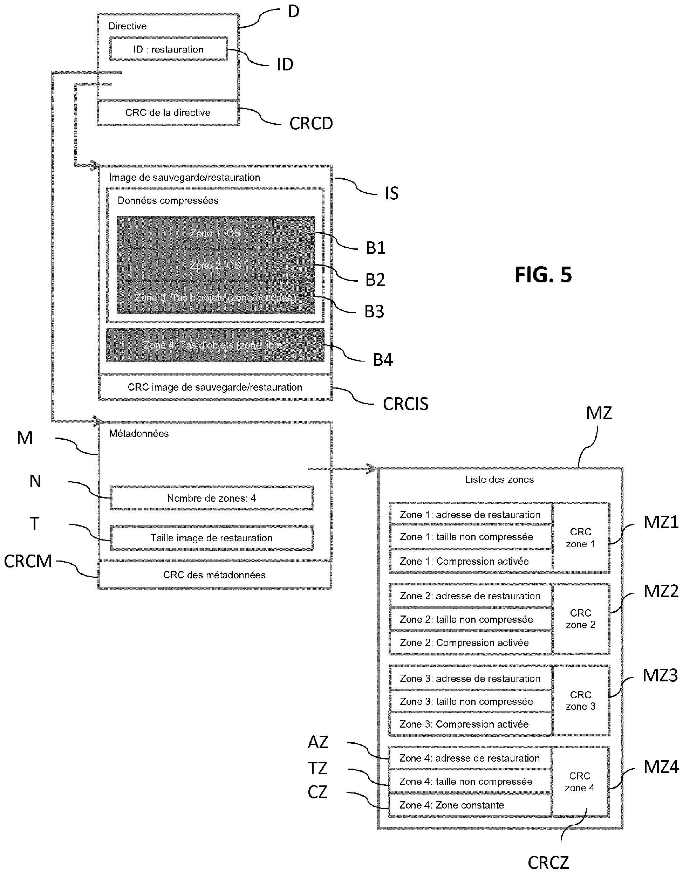

L'étape de compression 102 est mise en oeuvre chacune des sources zones de l'OS Z1 et Z2. En référence à la **figure 5****,** deux blocs compressés B1 e B2 correspondants sont produits.

Les blocs compressés B1 et B2 sont concaténées dans la zone de sauvegarde ZS de façon à minimiser la place occupée par l'ensemble des blocs compressés dans cette zone de sauvegarde ZS.

Par ailleurs, le programme de sauvegarde lance une défragmentation 104 d'au moins une zone source contenant des données d'applications à sauvegarder. La défragmentation est typiquement mise en oeuvre par un programme de défragmentation de l'OS.

De façon connue en elle-même, la défragmentation 104 déplace les données d'applications contenues dans chaque zone source dans la mémoire non volatile 2, de sorte à les regrouper davantage. Ainsi, à l'issue de la fragmentation 104, chaque zone source de données d'applications à sauvegarder est constituée, dans la mémoire non volatile 2, de deux régions contigües : une région occupée contenant toutes les données à sauvegarder, et une région libre ne contenant aucune donnée.

Les zones Z3 et Z4 représentées sur la figure 2 sont en réalité la région occupée et la région libre formées à l'issue de la défragmentation de la zone source formée par l'union des zones Z3 et Z4.

Pour chaque zone source de données d'applications défragmentée, sont mémorisées en mémoire volatile 3 l'adresse de début et la taille de chacune des deux régions de la zone source formées (occupée et libre).

Pour chaque zone source de données d'applications, le programme de sauvegarde compresse 106 les données utiles regroupées dans la région occupée Z3 de ladite zone source.

La compression 104 est mise en oeuvre de façon identique à la compression 102, pour chaque zone de données d'application à sauvegarder considérée, donc possiblement avec un algorithme de compression par dictionnaire glissant.

Chaque bloc compressé produit à l'issue de la compression 106 est concaténée avec la ou les bloc(s) compressé(s) produites à l'issue de la compression 102, dans la zone de sauvegarde ZS de la mémoire non volatile 2.

Les objets contenus dans la région occupée Z3 du tas d'objets sont donc compressés 106 de sorte à produire le bloc compressé B3, qui est concaténé aux blocs B1, B2.

Les objets ont chacun un entête de petite taille et qui varie peu d'un objet à l'autre. Ainsi, la compression des objets au moyen d'un algorithme de compression par dictionnaire fournit des taux de compression particulièrement élevés.

Par ailleurs, pour chaque zone source de données d'applications, le programme de sauvegarde compresse 108 le contenu de la région libre formée dans ladite zone source. Dans l'exemple de la figure 2, il n'y a qu'une seule région libre Z4 concernée par la compression 108.

L'algorithme de compression utilisé pour la compression 108 du contenu de la région libre Z4 est différent de celui utilisé pour la compression 106 des données contenues dans la région occupée Z3.

De façon très avantageuse, un codage par plages (« run-length encoding » ou RLE en anglais) est utilisé pour la compression 108.

Généralement, un motif particulier est écrit en mémoire pour signifier qu'une unité mémoire est libre c'est-à-dire non occupée par des données (par exemple, une région libre ne contient que le motif 0xFF dans chacun de ses octets). Un codage par plage est donc très performant pour compresser la région libre Z4 : il suffit en effet d'indiquer la valeur du motif particulier « libre » et le nombre de fois qu'il est répété dans la région libre Z4.

La défragmentation 104 permet d'améliorer le taux de compression cumulé des étapes de compression 106 et 108, puisqu'à l'issue de la défragmentation, la taille de la région occupée Z3 est diminuée et la taille de la région libre Z4 est agrandie.

Le bloc compressé - ou code par plages - B4 produit à l'issue de la compression 108 est concaténé avec les blocs compressés B1, B2, B3 dans la zone de sauvegarde ZS de la mémoire non volatile 2.

Les différents blocs compressés B1 à B4 résultant des compressions 102, 106 et 108 et concaténées dans la zone de sauvegarde ZS de la mémoire non volatile 2 forment ensemble une image de sauvegarde IS.

En outre, le programme de sauvegarde calcule 110 des informations de contrôle d'intégrité relatives à au moins une partie des données. Une information de contrôle est par exemple un code de redondance cyclique (CRC) se rapportant à une partie des données.

Une information de contrôle d'intégrité CRCZ est calculée pour chaque zone source Zi. Chaque information de contrôle d'intégrité CRCZ est calculée sur le contenu de chaque zone Zi avant leur compression.

En sus de l'image de sauvegarde IS, sont également mémorisées 112 dans la zone de sauvegarde ZS de la mémoire non volatile 2 des métadonnées M relatives aux zones sources Zi dont le contenu a été sauvegardé dans l'image de sauvegarde IS. Les métadonnées M comprennent :
- le nombre N de zones sources Zi de la mémoire non volatile 2 ayant fait l'objet d'une sauvegarde (4 dans l'exemple de la figure 3),
- pour chaque zone source Zi d'indice i allant de 1 à N, un descripteur MZi de zone source associé,
- la taille T de l'image de sauvegarde IS générée dans la zone de sauvegarde ZS,
- une information de contrôle d'intégrité CRCM relative aux métadonnées M, calculée conformément à la description qui précède de l'étape 110.

Le descripteur de zone MZi associé à chaque zone source Zi comprend :
- l'adresse de la zone source AZ,
- La taille TZ de la zone source (avant compression),
- au moins un paramètre CZ de compression utilisé pour compresser les données contenues dans la zone source Zi, par exemple, un champ indiquant le type d'algorithme de compression utilisé pour compresser la zone source Zi (codage par plage pour la région libre Z4 du tas d'objet, compression par dictionnaire pour les autres zones Z1, Z2, Z3, dans le mode de réalisation de la figure 2).
- l'information de contrôle d'intégrité CRCZ relative à la zone source (avant compression) ; calculée au cours de l'étape 110.

Chaque descripteur MZi de zone se rapporte donc à un bloc compressé Bi contenue dans l'image de sauvegarde IS. Par exemple, l'ordre des descripteurs MZi dans les métadonnées M correspond à l'ordre des blocs compressés Bi concaténées dans l'image de sauvegarde IS.

En outre, le programme de sauvegarde génère et mémorise 114 dans la zone de sauvegarde ZS une directive de restauration D. La directive de restauration D est encodée de manière à s'intégrer dans un interpréteur de directive, ne se limitant pas forcément à une opération de restauration.

La directive de restauration D comprend :
- un identifiant unique ID de restauration propre à la directive ; cet identifiant est destiné à être lu par un interpréteur.
- les métadonnées M ou l'adresse des métadonnées M,
- l'image de sauvegarde IS ou l'adresse de l'image de sauvegarde IS,
- une information de contrôle d'intégrité CRCD relative à la directive de restauration D, calculée conformément à la description qui précède de l'étape 110.

Le programme de sauvegarde renvoie au terminal 6, et ce via l'interface de communication 5, un statut indiquant que la sauvegarde est terminée.

Le contenu écrit dans la zone de sauvegarde ZS est illustré en **figure 5****.**

### Restauration de données

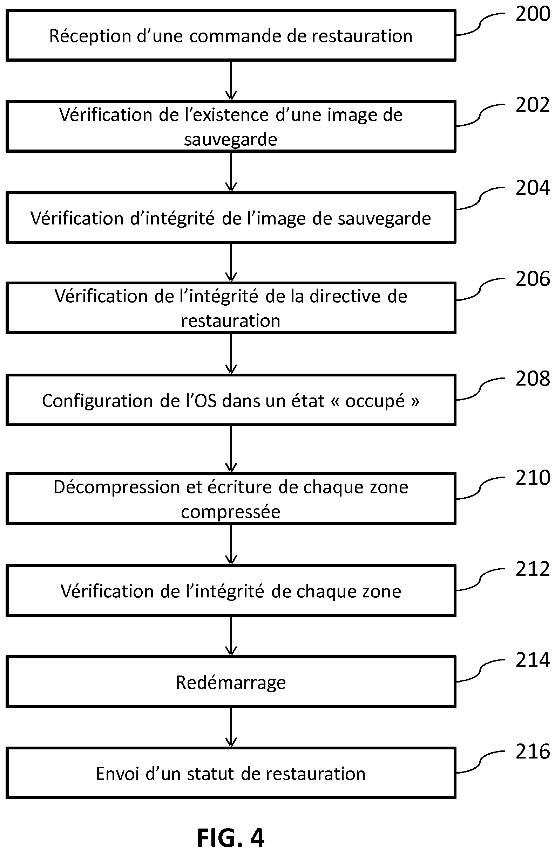

En référence à la **figure 4****,** les données sauvegardées sont restaurées dans la mémoire non volatile 2 à l'aide des étapes suivantes.

Le processeur 8 du terminal 6 génère une commande de restauration et l'envoie à l'élément sécurisé 1 via les interfaces de communication 7 et 5. La commande est par exemple de type ADPU.

La commande de restauration est reçue 200 par l'interface de communication 5, qui transmet la commande au processeur 4 pour qu'elle soit traitée par un programme de restauration. Le programme de restauration comprend ou fait appel à un interpréteur apte à lire le contenu de la directive de restauration D.

Le programme de restauration vérifie 202 l'existence d'une image de sauvegarde IS dans la zone de sauvegarde ZS.

Si aucune image de sauvegarde IS n'est trouvée dans la zone de sauvegarde ZS, un message d'erreur est retourné au terminal 6 via l'interface de communication 5, et la restauration se termine.

Sinon, le programme de restauration vérifie 204 l'intégrité de l'image de sauvegarde IS. Pour ce faire, il vérifie que la valeur de l'information de contrôle d'intégrité CRCIS de l'image de sauvegarde IS est en adéquation avec le contenu de l'image de sauvegarde IS.

Si le programme de restauration considère que l'image de sauvegarde IS n'est pas intègre, un message d'erreur est retourné au terminal 6 via l'interface de communication 5, et la restauration se termine.

Sinon, le programme de restauration vérifie 206 l'intégrité de la directive de restauration D. Pour ce faire, il vérifie que la valeur de l'information de contrôle d'intégrité CRCD de la directive de restauration D est en adéquation avec le contenu de la directive de restauration D.

Si le programme de restauration considère que la directive de restauration D n'est pas intègre, un message d'erreur est retourné au terminal 6 via l'interface de communication 5, et la restauration se termine. Ceci peut se produire notamment après une attaque externe ayant corrompu le contenu de la directive de restauration D.

Sinon, le programme de restauration reconfigure 208 l'élément sécurisé 1 dans un mode occupé. Dans le mode occupé, l'OS ne traite pas toute ou partie des commandes externes en provenance du terminal 6 qui sont reçues par l'élément sécurisé 1 via l'interface de communication 5.

Par exemple, dans le mode occupé, l'OS est configuré pour ne pas traiter une commande externe applicative de l'élément sécurisé 1. Dans ce cas, l'OS se borne à renvoyer au terminal 6 un message indicatif de la reconfiguration dans le mode occupé.

Par ailleurs, le programme de restauration vérifie l'intégrité des métadonnées M. Pour ce faire, il vérifie que la valeur de l'information de contrôle d'intégrité CRCM des métadonnées M est en adéquation avec le contenu des métadonnées M.

Si le programme de restauration considère que les métadonnées M ne sont pas intègres, un message d'erreur est retourné au terminal 6 via l'interface de communication 5, et la restauration se termine. Ceci peut se produire notamment après une attaque externe ayant corrompu le contenu des métadonnées M.

Sinon, le programme de restauration décompresse 210 chaque bloc compressé contenue dans l'image de sauvegarde IS.

Pour chaque bloc compressé Bi, i allant de 1 à N, le programme de restauration lit le descripteur de zone MZi associé à ce bloc compressé Bi. L'algorithme de décompression utilisé pour décompresser l'bloc compressé est déduit du paramètre de compression CZ contenu dans le descripteur MZi associé au bloc Bi.

Le contenu du bloc Bi est écrit, après décompression, dans la mémoire non volatile 2 à l'adresse AZ indiquée dans le descripteur de zone MZi.

De préférence, l'algorithme de compression utilisé au cours de la sauvegarde est de type asymétrique : dans ce cas, la compression est performante en termes de rendement mais relativement lente, tandis que la décompression est rapide.

De façon similaire à la compression, la décompression 210 comprend l'allocation d'un buffer de décompression dans la mémoire volatile 3. Le buffer de décompression représente le contexte nécessaire à la mise en oeuvre de l'algorithme de décompression. Il est en mémoire volatile 3 pour favoriser la rapidité de l'opération de décompression.

Le buffer de décompression est couplé à un buffer de sortie de la taille d'une page de la mémoire non volatile 2.

Au cours de la décompression 210, le programme de restauration lit les données contenues dans l'image de sauvegarde IS et les copie dans le buffer de décompression. Le résultat de la décompression de chaque bloc compressé est mémorisé temporairement dans le buffer de sortie alloué. Une fois le buffer de sortie rempli, son contenu est copié dans une page de la mémoire non volatile 2. L'utilisation de ce buffer supplémentaire permet de ne pas stresser la mémoire non volatile 2 lors de l'écriture des données décompressées. Il apporte une meilleure endurance du produit en cas d'opération de restauration fréquente.

Pour décompresser un bloc qui a été compressé à l'aide d'un codage par plage, une écriture en mémoire non volatile 2 peut être faite directement. Le programme de restauration lit, dans le bloc concerné de l'image de sauvegarde IS, la valeur du motif répété qui se trouvait dans la région libre, ainsi que le nombre de ses occurrences dans la région libre pour procéder à l'écriture de motif.

L'OS renvoie un statut de succès au terminal 6 pour l'informer du déroulement de l'opération.

A l'issue de l'étape de décompression, les mêmes zones sources Z1 à Z4 sont censées avoir les mêmes contenus qu'avant les compressions mises en oeuvre au cours de la sauvegarde. Toute modification du contenu d'une zone source, entre la fin de la sauvegarde et le début de la restauration a été effacée.

Le programme de restauration vérifie 212 l'intégrité de chaque zone source ainsi restaurée. Pour ce faire, il vérifie que la valeur de l'information de contrôle d'intégrité CRCZ contenu dans le descripteur Zi d'une zone donnée et associée au bloc compressé Bi correspond au contenu qui a été réécrit dans la mémoire non volatile 2 à l'adresse AZ indiquée dans le même descripteur Zi.

Si le programme de restauration considère qu'une zone réécrite Zi dans la mémoire non volatile 2 n'est pas intègre, un message d'erreur est retourné au terminal 6 via l'interface de communication 5, et la restauration se termine. Ceci peut se produire notamment après une attaque externe ayant corrompu le contenu de l'image de sauvegarde IS.

Si le programme de restauration considère que toutes les zones sources réécrites Z1 à Z4 ont un contenu intègre, alors ces zones ont été restaurées avec succès.

Le programme de restauration reconfigure l'élément sécurisé 1 dans un mode « disponible » (non occupé) dans lequel les commandes externes reçues par l'élément sécurisé 1 peuvent être traitées par l'OS.

Le programme de restauration renvoie 216 au terminal 6 un statut indiquant que la restauration s'est déroulée avec succès.

La reconfiguration dans le mode « disponible » comprend par exemple un redémarrage 214 complet de l'OS (hardware reset). Dans ce cas, l'envoi du statut est effectué avec ce redémarrage complet.

L'opération de restauration met en péril les données de l'OS et les données applicatives. Les applications sont-elles mêmes dans un était instable pendant la restauration. La configuration de l'élément sécurisé 1 dans le mode occupé au cours de la restauration permet de protéger l'élément sécurisé 1 contre une corruption de la mémoire non volatile 2 suscitée par l'exécution d'une commande externe pendant la restauration.

Toutefois, il se peut que l'élément sécurisé 1 soit accidentellement mise hors tension au cours de la restauration. Un mécanisme indépendant de l'OS de type « roll forward » est utilisé pour garantir l'atomicité et la sécurité de la restauration. Une restauration commencée reprendra même après coupure de courant. Il n'y aura pas de corruption en cas de perte d'alimentation.

Dans le cas d'une perte de courant qui se produit après la bascule de l'OS dans le mode occupé, l'OS va redémarrer dans le même état dédié, et reprendre la restauration de l'image depuis le début. Ce mécanisme va donc garantir l'atomicité de la restauration.

### Réinitialisation d'élément sécurisé

Généralement, trois acteurs différents interviennent sur un élément sécurisé 1 :
- Le fournisseur, qui fabrique l'élément sécurisé 1.
- L'émetteur, qui définit un jeu minimal de données permettant le bon fonctionnement de l'élément sécurisé 1. Le jeu minimal de données comprend ainsi le binaire de l'OS, et éventuellement au moins une application agréée par l'émetteur. Lorsque la mémoire non volatile 2 ne contient que ce jeu minimal de données, on dit conventionnellement que l'élément sécurisé 1 est dans un état de « sortie d'usine ».
- Des tiers qui accèdent en lecture et/ ou écriture à la mémoire non volatile 2, les tiers pouvant comprendre :
   ∘ un utilisateur final, qui utilise les fonctionnalités offertes par l'élément sécurisé 1, et/ou
   ∘ D'autres acteurs, déclenchant des installations à distance d'applications dans la mémoire non volatile 2 (par exemple par OTA).

Les procédés de sauvegarde et de restauration décrits précédemment trouvent avantageusement application pour réinitialiser un élément sécurisé 1 dans un état de sortie d'usine.

La sauvegarde est ainsi par exemple mise en oeuvre une fois par l'émetteur, alors que l'élément sécurisé 1 est dans son état de sortie d'usine. De préférence, la fonction de sauvegarde n'est pas rendue accessible à l'utilisateur final.

Plus tard, l'utilisateur final utilise l'élément sécurisé 1 (par exemple son terminal 6 personnel), ce qui a pour effet d'écrire des données supplémentaires dans la mémoire non volatile 2.

La fonction de restauration est rendue accessible à l'utilisateur final de l'élément sécurisé 1, c'est-à-dire que le terminal 6 de l'utilisateur est configuré pour permettre à cet utilisateur de déclencher l'envoi de la commande de restauration à l'élément sécurisé 1.

L'utilisateur peut déclencher une telle restauration en cas de comportement anormal de l'élément sécurisé 1, et ce sans l'aide du fournisseur, ou bien lorsqu'il décide de céder son élément sécurisé 1 à un tiers (toutes ses données personnelles sont effacées de la restauration dans l'état de sortie d'usine.

Si des applications supplémentaires non agréées ont été installées après la sauvegarde dans l'une de zones sources de la mémoire non volatile 2 de l'élément sécurisé 1, alors la restauration écrase le contenu des zones sources, ce qui efface tout application supplémentaire non agrées contenu dans l'une de ces zones sources.

L'élément sécurisé 1 est alors réinitialisé dans l'état de sortie d'usine.

L'utilisation d'un algorithme de compression asymétrique est avantageuse, car la sauvegarde a vocation à n'être mise en oeuvre que par l'émetteur, tandis que la restauration peut être mise en oeuvre à de multiples reprises. Le haut rendement de compression d'un tel algorithme permet de définir une zone de sauvegarde ZS relativement réduite, et l'utilisateur final n'a pas à subir les désagréments d'une restauration longue, la décompression étant rapide.

La sauvegarde/restauration de l'élément sécurisé 1 ne nécessite pas de modification de l'OS, ni de donnée en entrée. Cela permet au fournisseur de l'élément sécurisé 1 d'être autonome pour définir une image de sauvegarde IS avec son jeu minimal d'applications. Cela lui permet de gérer seul le déploiement de son produit sur le terrain. L'autonomie dont on parle ici est vis-à-vis du fournisseur d'OS.

La restauration peut s'effectuer en milieu hostile sans risquer de compromettre la sécurité du produit. En particulier, aucune donnée à sauvegarder ne rentre ni ne sort de l'élément sécurisé 1 au cours de la sauvegarde ou de la restauration, qui sont mises en oeuvre de façon locale à l'élément sécurisé 1, ce qui est une garantie de sécurité.

## Revendications

1. Procédé de sauvegarde de données mémorisées dans une mémoire non volatile (2) d'un élément sécurisé (1), le procédé comportant les étapes de :
• défragmentation (104) d'une zone de la mémoire non volatile (2) contenant au moins une partie des données à sauvegarder de sorte à former, dans la zone, une région occupée (Z3) contenant ladite partie des données et une région libre (Z4),
• compression (106) de la partie des données contenues dans la région occupée, après la défragmentation,
• compression (108) du contenu de la région libre au moyen d'un algorithme de compression différent de celui utilisé pour compresser la partie des données contenue dans la région occupée, dans lequel la compression (108) du contenu de la région libre (Z4) comprend un codage par plages de ce contenu,
• génération d'une image de sauvegarde (IS) contenant les données compressées,
• écriture de l'image de sauvegarde (IS) dans la mémoire non volatile (2) de l'élément sécurisé (1).

2. Procédé selon la revendication précédente, dans lequel la compression (102, 106, 108) est mise en oeuvre sur des données localisées dans plusieurs zones prédéterminées (Z1, Z2, Z3, Z4) de la mémoire non volatile (2), de sorte à produire plusieurs blocs compressés (B1, B2, B3, B4), la génération de l'image de sauvegarde (IS) comprenant une concaténation des blocs compressés.

3. Procédé selon l'une des revendications précédentes, dans lequel la zone contient des objets destinés à être manipulés par un programme codé dans un langage objet, et dans lequel les objets sont compressés par dictionnaire.

4. Procédé selon la revendication précédente, comprenant la création d'un dictionnaire de compression à partir des objets à compresser, la compression par dictionnaire des objets étant mise en oeuvre au moyen du dictionnaire créé.

5. Procédé selon l'une des revendications précédentes, dans lequel les données à sauvegarder sont contenues dans au moins une zone prédéterminée (Z1, Z2, Z3, Z4) de la mémoire non volatile (2), et dans lequel le procédé comprend la génération et la mémorisation (112) dans la mémoire non volatile (2) de métadonnées (M) comprenant, pour chaque zone, une adresse de la zone.

6. Procédé selon la revendication précédente, dans lequel les métadonnées (M) comprennent, pour au moins un des zones (Z1, Z2, Z3, Z4), une information de contrôle d'intégrité (CRCZ) de la zone, ou une taille (TZ) de la zone.

7. Procédé selon la revendication précédente, comprenant la génération et mémorisation (112) dans la mémoire non volatile (2) d'une information de contrôle d'intégrité (CRCM) des métadonnées (M).

8. Procédé selon la revendication précédente, comprenant la génération et mémorisation (112) dans la mémoire non volatile (2) d'une information de contrôle d'intégrité (CRCIS) de l'image de sauvegarde (IS) générée.

9. Procédé de réinitialisation d'un élément sécurisé comprenant une mémoire non volatile (2) mémorisant des données, le procédé comprenant des étapes de
• sauvegarde des données au moyen du procédé selon l'une des revendications précédentes,
• restauration des données sauvegardées.

10. Produit programme d'ordinateur comprenant des instructions de code de programme pour l'exécution des étapes du procédé selon l'une de revendications précédentes, lorsque ce programme est exécuté par au moins un processeur (4).

11. Elément sécurisé (1) comprenant :
• une mémoire non volatile (2)
• au moins un processeur (4) configuré pour sauvegarder des données mémorisées dans la mémoire non volatile (2),
l'élément sécurisé (1) étant **caractérisé en ce que** le processeur (4) est configuré pour :
• défragmenter une zone de la mémoire non volatile (2) contenant au moins une partie des données à sauvegarder de sorte à former, dans la zone, une région occupée (Z3) contenant ladite partie des données et une région libre (Z4),
• compresser la partie des données contenues dans la région occupée, après la défragmentation,
• compresser le contenu de la région libre au moyen d'un algorithme de compression différent de celui utilisé pour compresser la partie des données contenue dans la région occupée, dans lequel la compression (108) du contenu de la région libre (Z4) comprend un codage par plages de ce contenu,
• générer une image de sauvegarde (IS) contenant les données compressées,
• écrire dans la mémoire non volatile (2) l'image de sauvegarde (IS).

## Patentansprüche

1. Verfahren zum Sichern von Daten, die in einem nicht flüchtigen Speicher (2) eines gesicherten Elements (1) gespeichert sind, wobei das Verfahren die Schritte umfasst des:
- Defragmentierens (104) eines Bereichs des nicht flüchtigen Speichers (2), der mindestens einen Teil der zu sichernden Daten enthält, sodass in dem Bereich eine belegte Region (Z3), die den Teil der Daten enthält, und eine freie Region (Z4) gebildet werden,
- Komprimierens (106) des Teils der Daten, die in der belegten Region enthalten sind, nach dem Defragmentieren,
- Komprimierens (108) des Inhalts der freien Region mittels eines Komprimierungsalgorithmus, der sich von demjenigen unterscheidet, der zum Komprimieren des Teils der Daten verwendet wurde, welcher in der belegten Region enthalten ist, wobei das Komprimieren (108) des Inhalts der freien Region (Z4) eine Lauflängencodierung dieses Inhalts umfasst,
- Erzeugens eines Sicherungsabbilds (IS), das die komprimierten Daten enthält,
- Schreibens des Sicherungsabbilds (IS) in den nicht flüchtigen Speicher (2) des gesicherten Elements (1) .

2. Verfahren nach dem vorstehenden Anspruch, wobei das Komprimieren (102, 106, 108) an Daten umgesetzt wird, die in mehreren vorbestimmten Bereichen (Z1, Z2, Z3, Z4) des nicht flüchtigen Speichers (2) lokalisiert sind, sodass mehrere komprimierte Blöcke (B1, B2, B3, B4) produziert werden, wobei das Erzeugen des Sicherungsabbilds (IS) eine Verkettung der komprimierten Blöcke umfasst.

3. Verfahren nach einem der vorstehenden Ansprüche, wobei der Bereich Objekte enthält, die dazu bestimmt sind, von einem Programm gehandhabt zu werden, das in einer Objektsprache codiert ist, und wobei die Objekte wörterbuchkomprimiert sind.

4. Verfahren nach dem vorstehenden Anspruch, das das Erstellen eines Kompressionswörterbuchs ausgehend von den zu komprimierenden Objekten umfasst, wobei die Wörterbuchkompression der Objekte mittels des erstellten Wörterbuchs umgesetzt wird.

5. Verfahren nach einem der vorstehenden Ansprüche, wobei die zu sichernden Daten in mindestens einem vorbestimmten Bereich (Z1, Z2, Z3, Z4) des nicht flüchtigen Speichers (2) enthalten sind, und wobei das Verfahren das Erzeugen und das Speichern (112) von Metadaten (M) im nicht flüchtigen Speicher (2) umfasst, die für jeden Bereich eine Adresse des Bereichs umfassen.

6. Verfahren nach dem vorstehenden Anspruch, wobei die Metadaten (M) für mindestens einen der Bereiche (Z1, Z2, Z3, Z4) eine Information zur Integritätskontrolle (CRCZ) des Bereichs, oder eine Größe (TZ) des Bereichs umfassen.

7. Verfahren nach dem vorstehenden Anspruch, das das Erzeugen und Speichern (112) einer Information zur Integritätskontrolle (CRCM) der Metadaten (M) im nicht flüchtigen Speicher (2) umfasst.

8. Verfahren nach dem vorstehenden Anspruch, das das Erzeugen und Speichern (112) einer Information zur Integritätskontrolle (CRCIS) des erzeugten Sicherungsabbilds (IS) im nicht flüchtigen Speicher (2) umfasst.

9. Verfahren zum Zurücksetzen eines gesicherten Elements, das einen nicht flüchtigen Speicher (2) umfasst, der Daten speichert, wobei das Verfahren Schritte umfasst des
- Sicherns der Daten mittels des Verfahrens nach einem der vorstehenden Ansprüche,
- Wiederherstellens der gesicherten Daten.

10. Computerprogrammprodukt, das Programmcodeanweisungen zum Ausführen der Schritte des Verfahrens nach einem der vorstehenden Ansprüche umfasst, wenn dieses Programm von mindestens einem Prozessor (4) ausgeführt wird.

11. Gesichertes Element (1), umfassend:
- einen nicht flüchtigen Speicher (2),
- mindestens einen Prozessor (4), der dafür konfiguriert ist, Daten zu sichern, die im nicht flüchtigen Speicher (2) gespeichert sind,
wobei das gesicherte Element (1) **dadurch gekennzeichnet ist, dass** der Prozessor (4) dafür konfiguriert ist:
- einen Bereich des nicht flüchtigen Speichers (2), der mindestens einen Teil der zu sichernden Daten enthält, zu defragmentieren, sodass in dem Bereich eine belegte Region (Z3), die den Teil der Daten enthält, und eine freie Region (Z4) gebildet werden,
- den Teil der Daten, die in der belegten Region enthalten sind, nach dem Defragmentieren zu komprimieren,
- den Inhalt der freien Region mittels eines Komprimierungsalgorithmus zu komprimieren, der sich von demjenigen unterscheidet, der zum Komprimieren des Teils der Daten verwendet wurde, der in der belegten Region enthalten ist, wobei das Komprimieren (108) des Inhalts der freien Region (Z4) eine Lauflängencodierung dieses Inhalts umfasst,
- ein Sicherungsabbild (IS) zu erzeugen, das die komprimierten Daten enthält,
- das Sicherungsabbild (IS) in den nicht flüchtigen Speicher (2) zu schreiben.

## Claims

1. A method for backup of data stored in memory in a non-volatile memory (2) of a secure element (1), the method comprising the steps of:
• de-fragmenting (104) an area of the non-volatile memory (2) containing at least one portion of the data to be saved so as to form, in the area, an occupied region (Z3) containing said portion of the data and a free region (Z4),
• compressing (106) the portion of the data contained in the occupied region, after de-fragmentation,
• compressing (108) the contents of the free region by means of a compression algorithm different from the one used for compressing the portion of the data contained in the occupied region, wherein compressing (108) the contents of the free region (Z4) comprises applying a run-length coding of these contents,
• generating a backup image (IS) containing the compressed data,
• writing the backup image (IS) into the non-volatile memory (2) of the secure element (1).

2. The method according to the preceding claim, wherein the compressing (102, 106, 108) is applied on localized data in several predetermined areas (Z1, Z2, Z3, Z4) of the non-volatile memory (2), so as to produce several compressed blocks (B1, B2, B3, B4), the generation of the backup image (IS) comprising a concatenation of the compressed blocks.

3. The method according to one of the preceding claims, wherein the area contains objects intended to be handled by a program coded in an object language, and wherein the objects are compressed by a dictionary.

4. The method according to the preceding claim, comprising generating a compression dictionary from the objects to be compressed, wherein compressing the objects is carried out by means of the generated dictionary.

5. The method according to one of the preceding claims, wherein the data to be saved are contained in at least one predetermined area (Z1, Z2, Z3, Z4) of the non-volatile memory (2), and wherein the method comprises generating and storing (112) in the non-volatile memory (2) metadata (M) comprising, for each area, an address of the area.

6. The method according to the preceding claim, wherein the metadata (M) comprise, for at least one of the areas (Z1, Z2, Z3, Z4), integrity control data (CRCZ) of the area, or a size (TZ) of the area.

7. The method according to the preceding claim, comprising generating and storing (112) in the non-volatile memory (2) integrity control data (CRCM) of the metadata (M).

8. The method according to the preceding claim, comprising generating and storing (112) in the non-volatile memory (2) integrity control data (CRCIS) of the generated backup image (IS).

9. A method for resetting a secure element comprising a non-volatile memory (2) storing in memory data, the method comprising the steps of:
• saving data by means of the method according to one of the preceding claims,
• restoring the saved data.

10. A computer program product comprising code instructions of a program for executing steps of the method according to one of the preceding claims, when this program is executed by at least one processor (4).

11. A secure element (1) comprising:
• a non-volatile memory (2),
• at least one processor (4) configured for saving data stored in memory in the non-volatile memory (2),
the secure element (1) being **characterized in that** the processor (4) is configured for:
• de-fragmenting an area of the non-volatile memory (2) containing at least one portion of the data to be saved so as to form, in the area an occupied region (Z3) containing said portion of the data and a free region (Z4),
• compressing the portion of the data contained in the occupied region, after de-fragmentation,
• compressing the contents of the free region by means of a compression algorithm different from the one used for compressing the portion of the data contained in the occupied region, wherein compressing (108) the contents of the free region (Z4) comprises applying a run-length coding of these contents,
• generating a backup image (IS) containing the compressed data,
• writing into the non-volatile memory (2) the backup image (IS).
